# EUROPEAN PATENT APPLICATION

(11) **EP 1 515 262 A2**
(43) Date of publication of application: **16.03.2005**
(21) Application number: 04104080.9
(22) Date of filing: 25.08.2004
(51) Int. Cl.: G06K 15/00, B41M 3/00, G06F 3/12

(54) **Image update management**

(30) Priority: 25.08.2003 US 647728
(71) Applicant: Agfa Corporation, Ridgefield Park, NJ 07660-2199 (US)
(72) Inventor: Smith, David, Londonderry, NH 03053 (US)
(74) Representative: Verbrugghe, Anne Marie L.

(57) **Abstract**

In one aspect, the invention includes a method for minimizing performance degradation of a software module that manages images. This method includes the steps of managing image information of an image on the output manager status module and receiving a notification that updated image information for the image is available. The method also includes the steps of determining whether receipt of the updated image information will affect performance of the output manager status module and refraining from receiving the updated image information if, based on the determination, its receipt will affect the performance of the output manager status module.

## Description

### FIELD OF THE INVENTION

The present invention relates to a method for minimizing performance degradation. More specifically the invention is related to an output manager status module.

### BACKGROUND OF THE INVENTION

Printing presses use plates to print ink onto paper and other media. One method used for creating plates has been to expose photosensitive film with the matter to be printed. When the film is developed, the matter imaged on the film is imaged onto a photosensitive plate, sometimes referred to as "burning" a plate. After processing, the plate can be used to print the matter onto a medium. A printing project is referred to as a job. A job can include one or more sheets, where a sheet is the media to be printed on. A sheet can be printed on one or two sides.

In a black and white printing job, there is usually one plate that is used to print black ink. In a color printing job, a different plate is used for each color ink. Typically, a color job will use three colors of ink: cyan, magenta, and yellow. This is because a combination of cyan, magenta, and yellow can be used to make other colors. Often, in addition to cyan, magenta, and yellow, black ink is also used. An additional plate is then required to print the black ink. Occasionally, one or more colors will be printed separately as well, referred to as a "spot color." That color can also have its own plate.

To print on a press using a plate, the plate is installed on a press. The plate is generally held in place on the press by pair of clamps at opposite sides of the plate, referred to as a head clamp and a tail clamp. The plate is exposed to the appropriate color ink, and the inked plate is placed in contact with the media, such as a paper sheet, that is to be printed. Each image that is printed has a gripper edge. The gripper edge is the edge of a sheet (i.e. printed media) that is pulled through the press. A gripper edge marker is often explicitly included in an image as part of a job at the front end, for example with imposition software, such that the gripper edge marker is visible on the imaged plate. The gripper edge of a plate, which is the edge with the gripper edge marker, is attached to the press with the head clamp. By explicitly imaging the gripper edge marker onto the plate, the front end software ensures that there is sufficient distance between the head clamp and the image content so that the image on the plate can be printed. Electronic prepress systems have used an imagesetter to receive raster data for imaging onto photosensitive film. The film is then used to create a plate. The imagesetter exposes the photosensitive film pixel by pixel, for instance, by scanning a laser across and down a piece of film. Generally, the laser is scanned more quickly across the film in one direction, referred to as the fast scan direction, and then is moved more slowly down the film, referred to as the slow scan direction. Electronics controls the laser to expose, or refrain from exposing, each pixel in the raster data in a precise and repeatable manner. Recently, platesetters also have been used to create plates directly from raster data without the use of film. Imagesetters, platesetters and other output devices for printing are also referred to generally as print engines or writing engines.

Print engines typically have been served by a dedicated raster image processor (RIP) connected between the print engine and a "front end" computer running imaging application software such as Quark Express™ offered by Quark, Inc. of Denver, Colorado and Adobe Pagemaker™ by Adobe Systems Inc. of Mountain View, California. Exemplary front end computers run on operating systems such as Windows NT™, MacOS™ and UNIX™. In a typical configuration, a Macintosh™ front end is connected to a RIP which is coupled with an imagesetter. The RIP interprets the graphic information transmitted to it by the front end computer, and converts the graphic information into raster data that can be imaged by the print engine. The raster data produced by the RIP is configured to match required parameters of both the imagesetter and the media. The imagesetter parameters include imaging resolution, processing speed and specific printing capabilities. The media parameters include the length, width and thickness of the media, as well as the chemical makeup of the photosensitive layer.

Typically, the imaging application software provides output in the format of a page description language (PDL) such as Postscript™ and

PDF™ offered by Adobe Systems of Mountain View, California. Page description languages describe images using descriptions of the objects contained in the page. Use of page description languages allows pages to be described in a way that can be interpreted appropriately for imaging at various sizes and resolutions. PDL code is generally significantly smaller in data size than the raster data that results from interpreting the PDL code. Use of a page description language therefore allows for faster file transfer. Also, page description languages are machine-independent so that any print engine or other device which understands the PDL can produce an image therefrom.

RIP processing speed has generally improved over the past decade.

As RIP processing speed has increased, however, so has the demands of output devices. Recent use of larger format imagesetters and platesetters allows multi-page press size images in film or plate, referred to as "flats," to be produced that contain four, eight, or more pages in each image that are printed on one sheet of paper. These output devices also have been driven by a dedicated RIP or MUX.

In some systems, an output manager, also referred to as a print drive, receives raster data from the RIPS. The output manager can manage one or more bitmap images that are grouped into jobs. The output manager can include a plurality of software modules operating on a standard computer platform configured for efficient output manager functions. Embodiments of the output manager are described in U.S. Patent Nos. 6,535,307, 6,441,920, 6,295,133, 6,252,676, and 5,964,156 and U.S. Patent Application Serial No. 08/869,244, all of which are incorporated herein by reference. The output manager hardware can also include a number of interface boards or modules including a fast network interface and hardware connection to an output device. The output manager can receive raster data from the RIPs and can either store or immediately send to an output device, depending upon instructions programmed by the operator. The output manager can also be connected to the RIPs via a network, or can have individual connections to the RIPs.

A software module, also referred to below as an output manager status module, manages images associated with the output manager. The output manager status module typically provides a view of the data on the output manager via, e.g., a graphical user interface (GUI). One example of such a GUI is the PrintDrive Pilot™ program included in the Apogee PrintDrive™ offered by Agfa Corporation of Wilmington, Massachusetts. Moreover, the output manager status module enables a user to monitor a list of pending jobs. In some implementations, when a change is made to a job on the output manager, the output manager transmits one or more notification messages to the output manager status module. For instance, when a job is modified, the output manager transmits a notification to the output manager status module when a job characteristic changes, such as when pages, flats, and/or job attributes are updated. Another example is when a job is imaging. If a job completes outputting a series of images, the output manager can transmit one or more notifications to the output manager status module. Upon receipt of the notification(s), the output manager status module typically queries the output manager to receive updated job information.

As the frequency at which job updates occur increases, however, the frequency at which the output manager status module needs to refresh its display also increases. Thus, the responsiveness of the output manager status module can degrade as the update frequency increases. Moreover, as the amount of data that the output manager transmits to the output manager status module increases, the responsiveness of the output manager status module also can decrease because of the overhead associated with the reception of the data. Further, if many output manager status modules are communicating with the output manager, then the output manager has the burden of servicing all of the output manager status modules for the often large amount of job information. Consequently, the time that the output manager needs to service each output manager status module's frequent queries with the updated job information typically increases, potentially resulting in a less responsive output manager status module.

### SUMMARY OF THE INVENTION

The above-mentioned problems are realised by a method having the specific features set out in claim 1. Specific features for preferred embodiments of the invention are set out in the dependent claims. There remains a need to increase the responsiveness of an output manager status module and, therefore, minimize performance degradation.

In one aspect, the invention includes a method for minimizing performance degradation of an output manager status module. This method includes the steps of managing image information of an image on the output manager status module and receiving a notification that updated image information for the image is available. The method also includes the steps of determining whether receipt of updated image information will affect performance of the output manager status module and refraining from receiving the updated image information if, based on the determination, its receipt will affect the performance of the output manager status module.

In one embodiment, the managing step includes displaying the image information, managing printing operations, managing proofing operations, managing backup operations, and/or performing image operations. Further, the determining step can include determining an image activity status for the image. The determination of an image activity status for an image can include, for example, determining if a number of updates for the image over a fixed duration of time meets a number of updates threshold for managing image information. The image activity status is set to a "busy" state if the number of updates exceeds the number of updates threshold. In another embodiment, the determining step includes determining a size of the image. This determination can be based on, for instance, a number of pages of the image, a number of separations of the image, and/or a size of a data structure associated with the image. In one embodiment, the determining of the size of the image includes comparing the size of the image and a size threshold. If the image size exceeds the size threshold, then the image size status is set to a "large" state.

In one embodiment, the refraining step is to prevent or slow the receipt of updated information (e.g., by not querying the information). In one embodiment, the refraining step includes refraining from receiving the updated image information if the image size status is set to the "large" state and the image activity status is set to the "busy" state. In particular, the refraining step can include receiving a notification, determining that the image activity status is set to a "busy" state, refraining from querying the output manager for updated information, and consequently not receiving the updated information.

If the image size status is set to the "large" state and the image activity status is set to a "not busy" state, then the output manager status module can receive updated image information. The output manager status module can also receive the updated image information after a predetermined period of time. Moreover, the output manager status module can (e.g., automatically) monitor the image size status and the image activity status after a predetermined period of time.

In another aspect, the invention relates to a method for minimizing performance degradation of an output manager status module by managing image information of an image on the output manager status module and by continuously monitoring the image information to determine how frequent the image is being changed. The method can also include the steps of querying and/or receiving updated image information for the image when the image is being changed less than a predetermined amount.

In yet another aspect, the invention relates to an output manager status module. The output manager status module includes a managing module that manages image information of an image. The output manager status module also includes a receiver to receive a notification that updated image information for the image is available and a performance monitor to determine whether receipt of the updated image information will affect performance of the output manager status module. Additionally, the output manager status module includes an updated information refraining module that refrains from receiving the updated image information if, based on the determination made by the performance monitor, its receipt will affect the performance of the output manager status module. In one embodiment, the updated information refraining module refrains from querying the updated information from the output manager to refrain from receiving the updated image information.

In one embodiment, the image includes multiple images (e.g., grouped into a job). Further, the performance monitor can determine a number of updates for the image over a fixed duration of time, a size of the image, an image activity status, and/or an image size status. The output manager status module can also include a comparator that can compare the size of the image and a size threshold.

Further advantages and embodiments of the present invention will become apparent from the following description and drawings.

### BRIEF DESCRIPTION OF THE DRAWINGS

In the drawings, like reference characters refer to the same parts throughout the different views. Also, the drawings are not necessarily to scale, emphasis instead being placed upon illustrating the principles of the invention.
FIG. 1 is a block diagram of an embodiment of a prepress imaging system having an output manager and an output manager status module according to the present invention;
FIG. 2 is an embodiment of a flowchart of the workflow of a job in the prepress imaging system of FIG. 1;
FIG. 3 is a block diagram of an embodiment of the output manager of the prepress imaging system of FIG. 1;
FIG. 4 is a block diagram of an embodiment of the software for the output manager of the prepress imaging system of FIG. 1;
FIGS. 5A and 5B are a block diagram of an embodiment of the functional elements of the output manager software of FIG. 4;
FIG. 6 is a flowchart of an embodiment of the steps performed by the output manager status module of FIG. 1; and
FIG. 7 is a block diagram of an embodiment of modules of the output manager of FIG. 1.

### DETAILED DESCRIPTION OF THE INVENTION

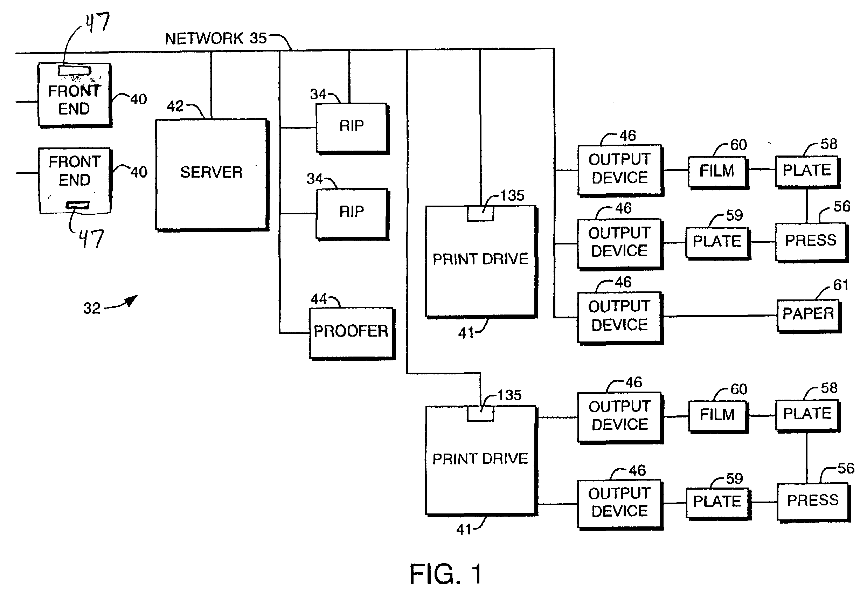

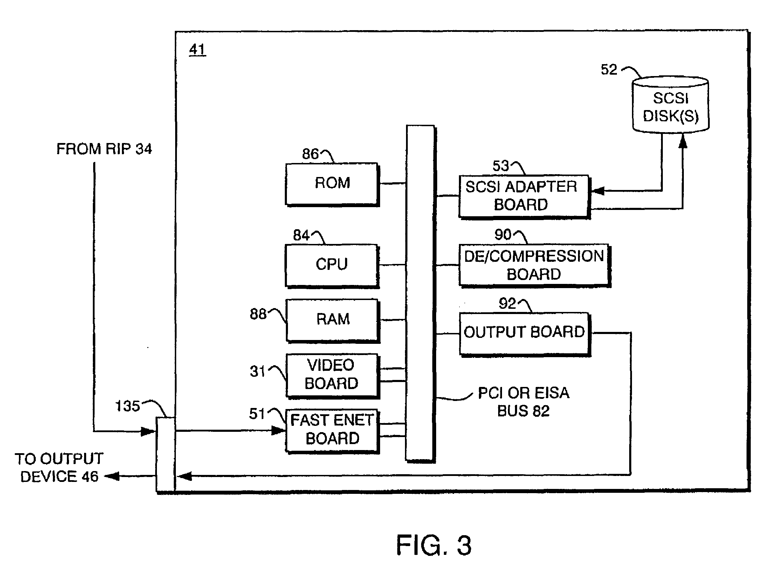

Referring to FIG. 1, a prepress system 32 includes one or more computers that are referred to as front ends 40. The front ends 40 are connected to computer network 35. The front ends 40 are used for system configuration, as well as for creating, editing, or otherwise processing image data. Both color and black and white images are prepared on the front ends 40 for processing by the prepress system 32 and eventual image reproduction by a printing press 56 using a printing plate 58. The front ends 40 are typically commercially available computers running on operating systems such as Windows NT™, Mac OS™, or UNIX™ or the like. The front ends 40 have imaging application software such as the commercially available Quark Express™ (from Quark, Inc.) and Adobe PageMaker™ (from Adobe Systems, Inc.), or any other similar software. The front ends 40 can also have imposition software used to lay out pages within an image, such as Preps™, available from ScenicSoft of Lynnwood, Washington, or any other such impositioning software. Impositioning software positions one or more pages within an image, so that multiple pages are included in a single image. Having multiple pages imaged on a single plate increases productivity, because multiple pages are printed at the same time. The imaging application software and the imposition software both produce images coded in a page description language. The front ends 40 can output images coded in a page description language directly to one or more raster image processors (RIPs) 34 via the network 35. The front ends 40 can also provide images to one or more image servers 42, or to a proofer 44 via the network 35.

The network 35 can be any of the various types of commercially available computer networks, but must be of sufficient capacity to handle the traffic generated by the prepress system. In one embodiment, the network is a Fast Ethernet network, including a 100baseT Hub and appropriate connections between the networked components and the hub.

In one embodiment, an image server 42 receives and stores images from the front end 40. The image server 42 can queue jobs for immediate transmission to an available RIP 34. The image server 42 can also store images from the front end 40 for later processing by RIP 34. The image server 42 helps improve workflow efficiency by allowing front end users to output their jobs even if the RIPs 34 are busy. By queuing jobs for RIPs 34 on servers 42, the RIPs 34 can be kept continuously busy.

The RIPS 34 can be software RIPs operating on a computer system, which can be one of the front ends 40, or other computer systems. The RIPs can be software RIPS such as the Agfa Viper™ software RIP and the Agfa Taipan™ software RIP, or hardware RIPs such as the AgfaStar™ hardware RIP, each of the above RIPS being commercially available from Agfa Corporation in Wilmington, MA. Each RIP 34 has a software and/or hardware RIP module for RIP functions such as screening, trapping, imposition, page or image combination, color separation and color management of image data.

The RIPs 34 each include a bi-directional network interface module 135 (see FIG. 3) over which PDL files are received from front ends 40 or the image servers 42. Each RIP 34 thus appears on the network and can be accessed by any front end 40 or any image server 42 on the network 35. The network interface module 135 also serves as an output interface for communication of the RIP 34 through the network 35. In another embodiment, separate hardwired input and output connections are used between each RIP 34 and an associated output manager 41.

An output manager 41, also referred to as a print drive, includes a plurality of software modules operating on a standard computer platform configured for efficient output manager functions. The output manager hardware can also include a number of interface boards or modules including a fast network interface and hardware connection to an output device 46. Output manager 41 receives raster data from the RIPs 34 which it can either store or immediately send to an output device 46, depending upon instructions programmed by the operator. Output manager 41 can be connected to the RIPs 34 via the network 35, or can have individual connections to the RIPS. The output manager 41 can be directly connected to the output devices 46, as shown in the embodiment of FIG. 1, or it can connect with the output devices 46 via network 35, or via other connections. The output devices 46 include imagesetters, platesetters, printers, plotters and other devices which accept and/or output raster data.

In one embodiment, the output manager 41 communicates with an output manager status module 47. The output manager status module 47 enables a user to, for example, monitor a list of jobs stored in the output manager 41, and to manage printing, proofing, and/or backup operations. The output manager status module 47 provides an up-to-date, substantially real-time view of the data on the output manager 41. The output manager status module 47 can execute on the output manager 41 computer or can execute on another computer and communicate with the output manager 41 over a network, which may be the network 35. In one embodiment, the output manager status module 47 is a module executing on one of the front ends 40. There can be multiple copies, each running on a different front end 40 or other device. The output manager status module 47 can alternatively execute on one or more of any of the other devices in communication with the output manager 41, such as the image server 42. In one embodiment, the output manager status module 47 displays information associated with each image or job (e.g., through a "properties page" or a thumbnail view of the image contents).

The output manager status module 47 provides a view of the data on the output manager 41 via, e.g., a graphical user interface (GUI). One example of such a GUI is the PrintDrive Pilot™ program included in the Apogee PrintDrive™ offered by Agfa Corporation of Wilmington, Massachusetts. As described above, an output manager status module 47 can be running on one or more devices. Similarly, the output manager status module's GUI can be executing on one or more devices. The devices which are hosting the output manager status module's GUI can be different than or the same as the devices hosting the output manager status module 47.

An output device 46 can be an imagesetter that images onto photosensitive film 60 or paper 61. The photosensitive film 60 is used to make at least one plate 58. A plate 58 is used on press 56 to print one color separation of an image. On a black and white image, only one color, black, can be necessary. For a color image, generally at least the three colors, cyan, magenta, and yellow, and often a fourth color, black, are used. One or more "spot color," which refers to an additional color, can be used as well. The imagesetter images the raster data for each color separation onto film, and the film is used to make a plate 58. The plates are then used on the press to print high quality printed material, often in large quantities. Examples of imagesetters are the Selectset Avantra® ,the SelectSet® 7000, and the AccuSet® Plus imagesetters, all available from Agfa Corporation of Wilmington, Massachusetts.

An output device 46 can also be a direct-to-plate or computer-to-plate device such as a platesetter which images directly onto a plate 59, without the use of film 60. By use of a platesetter 64, the step of creating a plate 58 by using film 60 is eliminated, improving workflow and eliminating the costs involved in making a film. Examples of platesetters are the Agfa Galileo™ platesetter and the Agfa Polaris 100™ digital platesetting system, available from Agfa Corporation of Wilmington, Massachusetts.

As described above, imagesetters and platesetters generally image on sensitive media using a laser or other energy source. The imagesetter scans the laser across the media in what is referred to as the fast scan direction and moves the laser down the media in what is referred to as the slow scan direction after each scanline has been imaged. A bitmap image generated by a RIP 34 is a compilation of scanlines of data, with each scanline containing a line of pixels in the fast scan direction. Generally, the length of the image in the slow scan direction is the number of scanlines.

The RIP 34 therefore generates bitmaps that are oriented such that the RIP 34 or the output manager 41, when transmitting an image to the imagesetter, can first transmit the first fast scan scanlines of the image, thus allowing the imagesetter to begin imaging the first scanlines of data, even as later scanlines are still being transmitted.

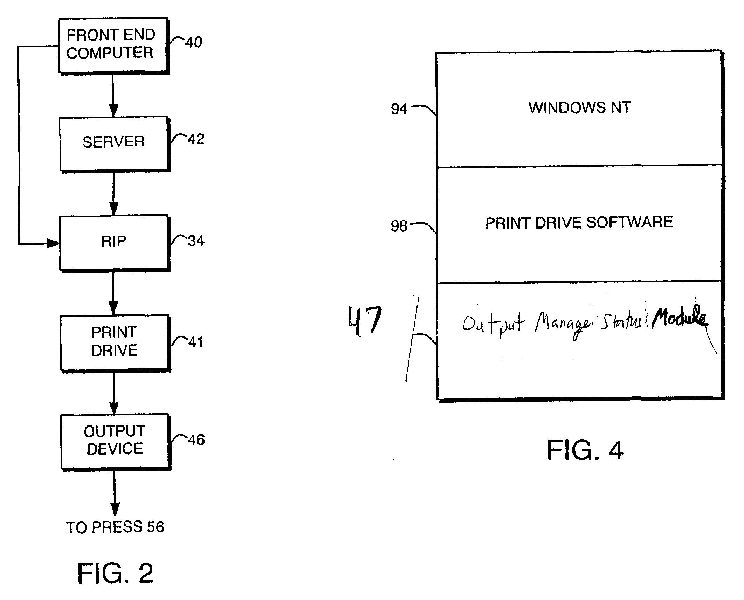

A consequence of the RIP 34 generating images so that they can be transmitted in fast scan scanlines by the imagesetter is that an image generated for one imagesetter can be different than the same image generated with the same imaging parameters for a different imagesetter. Different imagesetters have different aspect ratios. For example, the Agfa Galileo platesetter measures approximately 32.8" in the fast scan direction and 44" in the slow scan direction. The Agfa Avantra 44 measures approximately 44.5" in the fast scan direction and 36" in the slow scan direction. A 30"x40" image that is processed by a RIP for output on a Galileo will be processed so that the longer edge will be imaged in the slow scan direction. If the RIP processed the same image for the Avantra 44, the image would be oriented such that the longer edge will be imaged in the fast scan direction. Thus, the same image that is processed for two different imagesetters can be oriented in different directions. Referring to FIG. 2, the work flow through the system of FIG. 1 begins with the front end 40. The image is designed using an imaging application such as PageMaker™. An exemplary image includes both text and graphics, and the image can be impositioned on the front end 40, meaning that a number of pages are placed appropriately within a flat. The front end 40 can queue the image for processing by sending the job to the image server 42. Alternatively, the front end 40 can output the job directly to a RIP 34. Use of an image server 42 provides the system operator with more constant utilization of the front end 40 and the RIP 34 because neither the front end 40 nor the RIP 34 wait for the other. The image is transmitted to the RIP 34 by either the front end 40 or the image server 42. The image is then processed by the RIP 34. The RIP 34 outputs raster data to the output manager 41 which, in turn, stores the raster data until it is ready to be imaged onto an output device 46.

Note that numerous varied configurations of a prepress imaging system similar to that shown in FIG. 1 can be utilized to implement the principles of the current invention. For instance, the system could include any combination of the following: one or more front end computers 40; one or more servers 42; one or more RIPs 34; one or more proofers 44; one or more output managers 41; and one or more output devices 46. Any number of printing presses 56 could thereafter connect to the prepress imaging system.

The press 56 is included in the flowchart of FIG. 2 for completeness of the image origination to printing process workflow, however, the press 56 is actually not part of the prepress imaging system. The primary function of the prepress system is to efficiently produce plates for use in the press 56. As is described below, information generated during the prepress workflow can be useful for the press printing.

Although the preferred embodiment calls for the output device 46 to be a print engine, the output device can be any destination device or application which accepts raster data, such as a hard drive for storage. A print engine output device 46 can render an image onto any known media such as paper, film or plate. Although frequently a RIP 34, output manager 41 and output device 46 will be situated locally; while the press 56, front end 40 and server 42 are more remotely situated, the various components of the prepress imaging system can generally be either locally or remotely situated, subject to variables such as cable signal loss limitations, network bandwidth, etc. Moreover, image data used throughout the prepress imaging system 32 can generally be stored in any component accessible over the network, i.e. the front end 40, the server 42 or the output manager 34.

The output manager 41 receives raster data from the RIP 34 and outputs the raster data to output device 46, thereby providing work flow and efficiency benefits. In addition, the output manager 41 is capable of manipulating raster data in a way that was not previously possible. Specifically, the output manager can combine color separations from the same or different images after the images have been processed by the raster image processor 34. This provides the user with the capability of modifying raster data after it has been processed by the RIP 34. For example, the output manager 41 includes operation as a digital image combiner, such as a digital doubleburner that combines two images onto the same plate. The output manager 41 also provides a masking operation as part of the digital image combiner for combining images to mask out part of an image, which is the electronic equivalent of deleting a section of imaged film. This is disclosed in U.S. Patent Serial No. 6,295,133, which is incorporated herein by reference.

Referring to FIG. 3, one embodiment of an output manager 41 includes at least one CPU 84 connected to a multiple connection system such as a PCI or EISA bus 82. Other bus configurations are also suitable. In one embodiment CPU 84 is an Intel Pentium™ processor. Many other commercially available processors are also suitable. Output manager 41 also includes ROM 86, RAM 88 and a fast Ethernet board 51. Enough RAM 88 is necessary to support the operating system and to process the raster data sent and received by the output manager 41. A SCSI adapter board 53 is connected to the bus 82 and at least one SCSI storage device 52, e.g. a hard disk.

Output manager 41 optionally includes a compression/decompression board 90 for compressing and decompressing files, as well as an engine interface or output board 92 for direct connection to an output device 46. The network interface module or output manager interface terminal 135 is a hardware interface between the output manager 41 and the network 35. It should be understood that other configurations are possible.

Referring to FIG. 4, in one embodiment the output manager 41 is a computer running the Microsoft Windows NT™ or later operating system 94. The output manager software 98 runs in coordination with the operating system 94 to interface with the hardware components of the system. Specifically, the output manager software 98 operates as a set of Windows NT™ services which are configured, started, and stopped by a NT service manager. It will be understood that use of other software configurations and operating systems are possible.

An output manager status module 47 directs the activities of the output manager 41.

In one embodiment, the output manager status module 47 allows the user to perform local setup and configuration whereby the user configures the output manager 41 for an output device 46 to which it is connected. The output manager status module 47 is also used to control the work flow and the raster data processing features. In one embodiment, the output manager status module 47 executes on the output manager 41 and is also capable of running on workstations such as front ends 40 or other computer systems connected either locally or remotely to the network 35. Users of an output manager status module 47 running on a different system have access to the same control and status features as users of the output manager status module 47 running locally on an output manager 41.

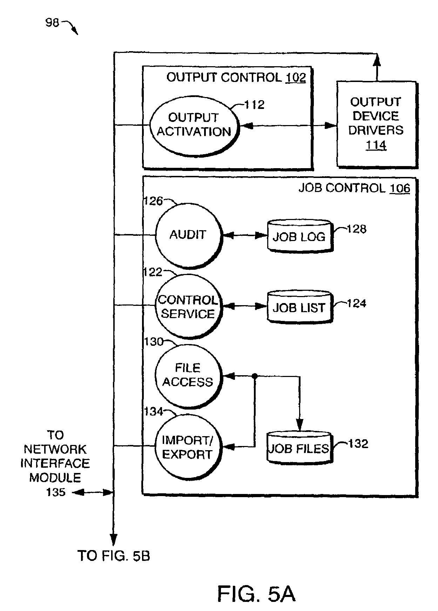

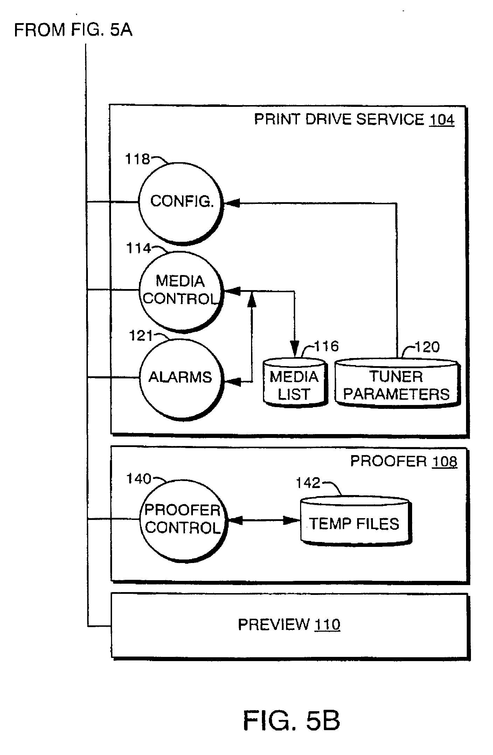

In more detail, and referring to FIGs. 5A and 5B, the output manager software 98 includes an output control system 102. The output control system 102 includes an output control interface subsystem or output activation system 112. The output control interface subsystem 112 communicates with output device drivers 114 to transmit raster data to an output device 46. The output control system 102 can reactivate the device drivers 114 in the case of error.

The output manager software 98 also includes an output manager service system 104. The output manager service system 104 includes a media control subsystem 114. The media control system 114 provides an interface to the media list 116, which contains information about each type of media available to the output manager 41. Information about the media types supported on the installed output devices 46 are made available to a RIP 34 via this subsystem 114. Initial mapping of media types is done when an output device 46 is installed and can be changed at any time through the output manager status module 47.

The output manager software 98 includes a configuration subsystem 118. The configuration subsystem 118 works with the output manager status module 47 to configure the output manager software 98. In one embodiment, configuration parameters 120 are stored in the SOFTWARE section of the NT registry and the configuration subsystem 118 provides an interface to this data. Alarms subsection 121 provides alarms if errors are encountered. Alarms can sound on the output manager 41 or on computers 40 connected to the output manager 41 via the output manager status module 47.

Job control system 106 receives, stores, and initiates output of raster data. The job control service 122 provides access to the data and functions associated with a job list 124 which is a list of all raster data contained in the system 32. The raster data is organized by image and color separations, so that the job list 124 holds the location information and status for all raster data associated with a job. All files for a job are written to a data storage area of the output manager 41 or in other accessible memory elsewhere in the system 32, such as in the front end 40 or the server 42. In one embodiment, each color separation is stored in its own job file in TIFF format. All color separations and their descriptive names are stored in the job list 124. These files are accessed through the job control service 122. File operations supported by the job control service 122 include addition of new jobs, deletion of job files, replacement of job files, and marking color separations as "imagable" and "not imagable."

The job control service 122 also includes a job picker. The job picker determines how jobs on the job list are chosen for output to the currently connected print engine 46. The job picker scans the job list 124 for all jobs that can be output at that time. The determination of which jobs to output is based upon how the job picker is configured. For example, with regard to media, the job picker can be configured to use the media type and size indicated by the RIP 34 when it sent the job, use the media type indicated by the RIP 34 but image on any size media (as long as it is large enough for the image), or to ignore the media type and size specified by the RIP 34. The job picker can also be configured to conserve media, also referred to as media optimization. The job picker can be configured to always optimize using spindles when no media size is used, meaning that a choice of media will be made to use the smallest media possible for an image. Alternatively, the job picker can be configured to use ganging on loaded media, meaning that jobs for the same media will be imaged immediately after each other, to reduce inter-image media waste. Ganging will give priority to images that can use the media that is already loaded on the machine. The job picker can also be configured not to try to conserve media, or to use the media optimization specified by a particular print job. The job picker can also be configured for a number of jobs that can precede the next job in the list so that they can be imaged on the same media. When that limit is exceeded, a change media command is sent to the output device 46 so the next job in the list 124 can be run.

The job audit log subsystem 126 provides access to the job audit log 128. The job audit log 128 is used to record transactional job oriented events occurring on any part of the output manager system 32. The job audit log 128 persists even after a job is deleted.

The persistence time of the job audit log files 128 is configurable. Job files are stored and accessed using the file access subsystem 130. In one embodiment, job raster data is stored in TIFF format, and the raster data for each color separation is stored in a separate file in the jobs data store 132. All information regarding a job is stored either in the job list 124 or in the job files 132. Typical job list information is that which relates to the job as a whole, such as priority, media type, and processing options.

Typical job file information includes when and where to print a job, how many copies to print, how many images per flat will be printed, etc. The job list and job file information is used by the job control service 122 to schedule a job for imaging.

The import/export subsystem 134 provides a mechanism for files to be imported and exported from or to other file systems connected to the network 35. This mechanism allows for the archiving of files in the job list 124. Files can be copied to any local or networked disk device. Import allows a new job to be created by importing the raster data, and creating, via the job control service 122, a directory in which to copy the job files. The job control service 122 adds the copied files to the job list 124.

The output manager software 98 can also include such other functionality as proofer system 108, which includes proofer control 140 to convert raster data files for imaging on a proofer 44. Temporary proofer files are stored within a temporary store 142.

The preview system 110 provides access to the jobs in the job list 124 for user review on a computer monitor. Jobs are accessed via job control service 122. Raster data can be compressed using compression board 90. The resolution can also be reduced to match the resolution of a computer monitor, which is much less than the resolution of a print engine 46. A preview image is generated from multiple color separations, and is sent in screen resolution to a preview client application.

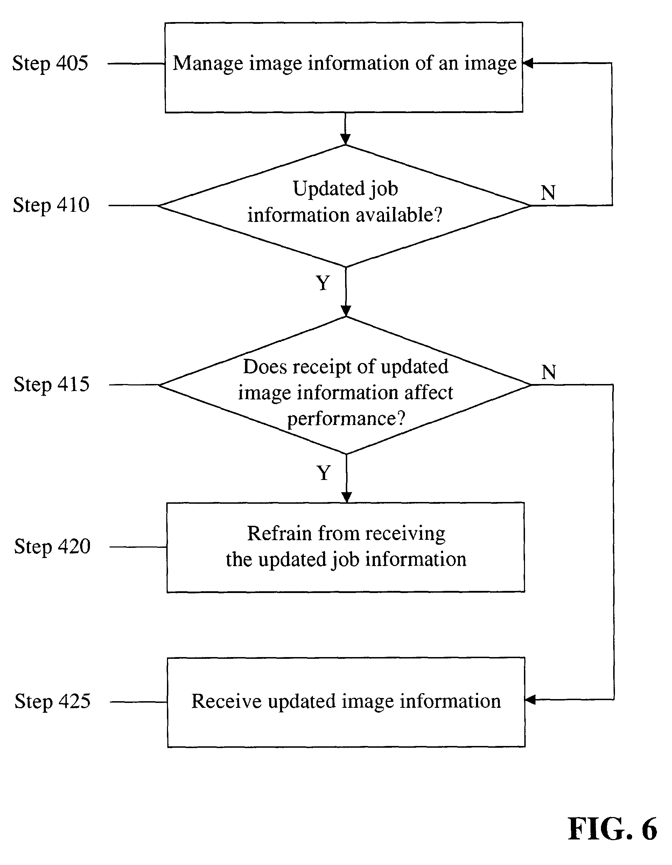

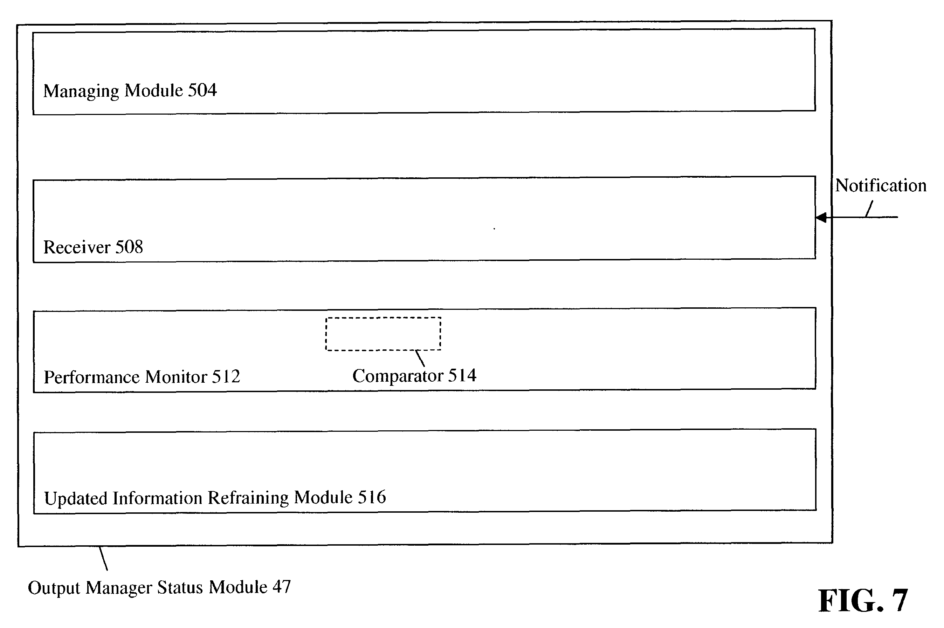

Referring to FIGS. 6 and 7, in one embodiment, the output manager status module 47 is designed such that the responsiveness and performance of the output manager status module 47 is not affected by the activity of one or more jobs or job characteristics. These characteristics can include the size of the job, the frequency at which one or more of the jobs are being updated, and the number of output manager status modules 47 that the output manager 41 communicates with.

As described above, the output manager status module 47 manages information associated with an image or a job (step 405) where a job can include multiple images. Although described below with respect to an image, the description also applies to a job. In one embodiment, the output manager status module 47 includes a managing module 504 that manages the image information. The managing of information can include displaying the image information, managing printing operations, managing proofing operations, managing backup operations, and/or performing image operations.

In one embodiment, the output manager status module 47 determines if updated job information is available (step 410). The output manager 41 transmits notifications to the output manager status module 47 when updated information is available for an image or a job. In one embodiment, the output manager status module 47 includes a receiver 508 to receive the notifications from the output manager 41. The output manager status module's determination can occur when the output manager status module 47 receives a notification from the output manager 41. Thus, in this embodiment the output manager status module 47 reacts to a notification in substantially real-time without having to poll or monitor for the receipt of notifications. Alternatively, the output manager status module 47 continuously or periodically monitors or polls for receipt of a notification message.

An example of a notification is "Image #18 has changed." The notification can also be more specific, such as "Job #18, Sheet 1, Back Cyan separation has changed." Thus, the notification can have any level of specificity, can be related to any image(s) or job(s), and can be any form.

In one embodiment, communications between the output manager 41 and the output manager status module 47 occur via standard telephone lines, LAN or WAN links (e.g., T1, T3, 56kb, X.25), broadband connections (ISDN, Frame Relay, ATM), and wireless connections. Moreover, the communication protocols used for these communications between the output manager 41 and the output manager status module 47 can include, for example, such standard protocols as the HyperText Transfer Protocol (HTTP), Secure Socket Layer (SSL) of the HyperText Transfer Protocol (HTTPS), TCP/IP, IPX, SPX, NetBIOS, Ethernet, RS232, messaging application programming interface (MAPI) protocol, real-time streaming protocol (RTSP), real-time streaming protocol used for user datagram protocol scheme (RTSPU), the Progressive Networks Multimedia (PNM) protocol developed by RealNetworks, Inc. of Seattle, WA, manufacturing message specification (MMS) protocol, and direct asynchronous connections. It should be understood that other protocols can be used.

In one embodiment, the output manager 41 has updated information when changes are made to a job (or image). For example, the output manager 41 transmits a notification to the output manager status module 47 when the output manager 41 receives changes to one or more pages, flats, and/or job attributes. In another embodiment, the output manager 41 transmits a notification to the output manager status module 47 when a job completes outputting a series of images. If the receiver 508 does not receive updated information, the output manager status module 47 (i.e., the managing module 504) continues to manage the image / job information.

In one embodiment, if the receiver 508 receives a notification from the output manager 41, a performance monitor 512 of the output manager status module 47 then determines whether receipt of the updated information will affect the performance of the output manager status module 47. In one embodiment, the performance monitor 512 makes this determination by determining an image activity status for the image. In one embodiment, the image activity status is set to either a "busy" state or a "not busy" state based on the number of updates to the image (or job) over a fixed period of time. In one embodiment, the performance monitor 512 sets the image activity status to the "busy" state if the number of updates to the image exceeds a number of updates threshold. Moreover, the performance monitor 512 sets the image activity status to the "not busy" state if the number of updates to the image is less than or equal to the number of updates threshold. The thresholds described above and below are dependent upon the hardware of the system. In particular, the thresholds can depend on the hardware that the output manager 41 and/or the output manager status module 47 are executing on.

Moreover, the performance monitor 512 can also determine the size of the image that has updated information associated with the image. For example, the performance monitor 512 can determine the number of pages of the image, the number of separations of the image, and/or the size of the data structure of the image. If the image size exceeds the size threshold, the performance monitor 512 sets the image size status to a "large" state. If, however, the image size is less than or equal to the size threshold, the performance monitor 512 sets the image size status to a "not large" state. In one embodiment, the performance monitor 512 includes a comparator 514 to make comparisons. Exemplary comparisons include, for example, a comparison between the size of the image and a size threshold and/or the number of updates to the image and the number of updates threshold.

In one embodiment, if the performance monitor 512 determines that the job size is set to the "large" state and the job status is set to the "busy" state, then the receipt of the updated information will affect performance. Because of this performance degradation, the output manager status module 47 does not query the updated information so that it does not receive any updated information for the image or job (step 420). Thus, in one embodiment the updated information refraining module 516 refrains from receiving the updated information by not querying the output manager 41 for the updated information.

If the updated information refraining module 516 refrains from receiving the updated information associated with a particular image, the output manager status module 47 considers the image to be "asleep". Thus, an image that is "asleep" refers to an image that has not been updated with new information (from the output manager 41) despite the fact that updated information is available. If an image is "asleep" and if the image size status is set to "not large," then the output manager output manager status module 47 "wakes up" the image by receiving the updated information. Further, if an image is "asleep" and if the image size status is set to "large" and the image status is set to "not busy," then the output manager output manager status module 47 also "wakes up" the image by receiving the updated information. Thus, "waking up" an image refers to the output manager status module 47 receiving the updated information from the output manager 41. In one embodiment, the receiving of the updated information occurs when the output manager status module 47 queries the output manager 41 for the particular updated information associated with the image that was "asleep." When an image has been "put to sleep," the output manager status module 47 can indicate this via an indicator on the image list view. For instance, an image can be displayed in red rather than in black if the image is "asleep." Moreover, when an image has been "put to sleep", the output manager status module 47 displays an indication of the image being "put to sleep" in the display of the details of the image (e.g., an indicator in the dialog title bar). If, however, the performance monitor 512 determines that the reception of the updated information for a particular image will not affect performance, the receiver 504 receives the updated information associated with the image (step 425). In one embodiment, the output manager status module 47 queries the output manager 41 for the updated information (e.g., by transmitting a request to the output manager 41) and then the receiver 504 receives this updated information.

In some embodiments, the output manager status module 47 monitors the "sleeping" images / jobs. If the image activity status is "not busy," the output manager status module 47 can "wake up" the "sleeping" image and receive the updated information associated with the image. Furthermore, the output manager status module 47 then refreshes the data view so that the display is current even upon receipt of the updated information. Although each module 504-516 is described above as performing particular functions, any module 504-516 can perform any of the functions described above.

It is to be understood that the above described embodiments are merely illustrative of the present invention and represent a limited number of the specific embodiments that can provide applications of the principles of the invention. Numerous and varied other arrangements can be readily devised in accordance with these principles by those skilled in the art without departing from the spirit and scope of the invention as claimed.

## Claims

1. A method for minimizing performance degradation of an output manager status module, the method comprising:
- managing, by an output manager status module, image information of at least one image;
- receiving a notification that updated image information for the image is available;
- determining whether receipt of the updated image information will affect performance of the output manager status module; and
- refraining from receiving the updated image information if, based on the determination, its receipt will affect the performance of the output manager status module.

2. The method of claim 1 wherein the managing step further comprises at least one of displaying the image information, managing printing operations, managing proofing operations, managing backup operations, and performing image operations.

3. The method according to anyone of the previous claims wherein the determining step further comprises determining an image activity status for the image.

4. The method of claim 3 further comprising determining if a number of updates for the image over a fixed duration of time meets a number of updates threshold for managing image information.

5. The method of claim 4 further comprising setting the image activity status to a busy state if the number of updates exceeds the number of updates threshold.

6. The method of claim 4 further comprising setting the image activity status to a not busy state if the number of updates is at least one of lower than and meets the number of updates threshold.

7. The method according to anyone of the previous claims wherein the determining step further comprises determining a size of the image.

8. The method of claim 7 wherein the determining of the size of the image further comprises at least one of determining a number of pages of the image, determining a number of separations of the image, and determining a size of a data structure associated with the image.

9. The method according to anyone of the claims claim 7 to 8 wherein the determining of the size of the image further comprises comparing the size of the image and a size threshold.

10. The method of claim 9 further comprising setting an image size status to a large state if the image size exceeds the size threshold.

11. The method of claim 10 wherein the refraining step further comprises refraining from receiving the updated image information if the image size status is set to the large state and the image activity status is set to the busy state.

12. The method according to anyone of the claims 10 to 11 further comprising receiving the updated image information if the image size status is set to a state other than the large state.

13. The method according to anyone of the claims 10 to 12 further comprising receiving the updated image information if the image size status is set to the large state and the image activity status is set to a state other than the busy state.

14. The method according to anyone of the claims 10 to 13 further comprising monitoring the image size status and the image activity status.

15. The method according to anyone of the claims 10 to 14 further comprising receiving the updated image information after a predetermined period of time.

16. The method according to anyone of the claims 7 to 15 further comprising providing an indication of at least one of the image activity status and the image size status to a user.

17. The method according to anyone of the previous claims wherein the managing of image information further comprises managing information for a plurality of images grouped into a job.

18. The method according to anyone of the claims 10 to 17 wherein the refraining step further comprises refraining from receiving the updated image information if the image size status is set to the large state and the image activity status is set to the busy state.

19. An output manager status module comprising:
- a managing module managing image information of ay least one image;
- a receiver receiving a notification that updated image information for the image is available;
- a performance monitor determining whether receipt of the updated image information will affect performance of the output manager status module; and
- an updated information refraining module refraining from receiving the updated image information if, based on the determination made by the performance monitor, its receipt will affect the performance of the output manager status module.

20. The output manager status module of claim 19 wherein the performance monitor determines at least one of a number of updates for the image over a fixed duration of time, a size of the image, an image activity status, and an image size status.

21. The output manager status module of claim 20 further comprising a comparator to compare the size of the image and a size threshold.

22. The output manager status module according to anyone of the claims 19 to 21 wherein the updated information refraining module refrains from querying the updated image information. ■
